# EUROPEAN PATENT SPECIFICATION

(11) **EP 0 469 096 B1**
(45) Date of publication and mention of the grant of the patent: **05.07.1995**
(21) Application number: 90908102.8
(22) Date of filing: 18.04.1990
(51) Int. Cl.: F16H 3/60

(54) **REVERSIBLE POWER TRANSMISSION**
UMKEHRBARE KRAFTSTROM-ÜBERTRAGUNG
TRANSMISSION DE FORCE MOTRICE REVERSIBLE

(30) Priority: 20.04.1989 SE 8901434
(43) Date of publication of application: 05.02.1992
(73) Proprietor: NYBERG, Jan-Erik, S-826 00 Söderhamn (SE)
(72) Inventor: NYBERG, Jan-Erik, S-826 00 Söderhamn (SE)
(74) Representative: Johansson, Lars E.
(86) International application number: SE9000258
(87) International publication number: WO9012968

(56) References cited:
- EP-A- 0 038 968
- DE-A- 2 835 399
- SE-B- 450 905
- US-A- 2 504 781

## Description

### Background of the invention

When power is to be transmitted from a power source to rotary processing means in disintegrators of the type adapted to disintegrate heavy material, such as construction waste, hard wood or pieces of concrete, there is need of a power transmission capable not only of transmitting considerable driving torques during normal operation, but also of being reversed in case the processing means of the machine are jammed by exceptionally hard objects, e.g. steel girders and the like, accompanying the material to be disintegrated. For this purpose, hydraulic type transmissions have previously been used, but these are complicated, expensive to manufacture and, furthermore, have poor efficiency. Another disadvantage of these transmissions is that they cannot withstand heavy loads during start-ups.

### Summary of the invention

The present invention aims at providing a reversible power transmission having input and output main shafts and being especially, but not solely, adapted to be used in disintegrators. This power transmission should be made up of simple mechanical components and thus be inexpensive to manufacture as well as reliable and highly efficient in operation. According to the invention, this is achieved by the features stated in claim 1.

### Brief description of the drawings

In the drawings,
- FIG 1: is a longitudinal section schematically showing the transmission according to the invention in an operating state, i.e. the normal state of operation,
- FIG 2: is a schematic perspective view showing the transmission in the state in Fig. 1,
- FIGS. 3 and 4: are a longitudinal section and a perspective view, respectively, showing the transmission in a state of reversion,
- FIGS. 5 and 6: are a longitudinal section and a perspective view, respectively, showing the transmission in off-position,
- FIG. 7: is a schematic view of an arrangement for automatic disengagement of the transmission in the event of overloading, and
- FIG. 8: is an end view of the arrangement in Fig. 7.

### Description of a preferred embodiment

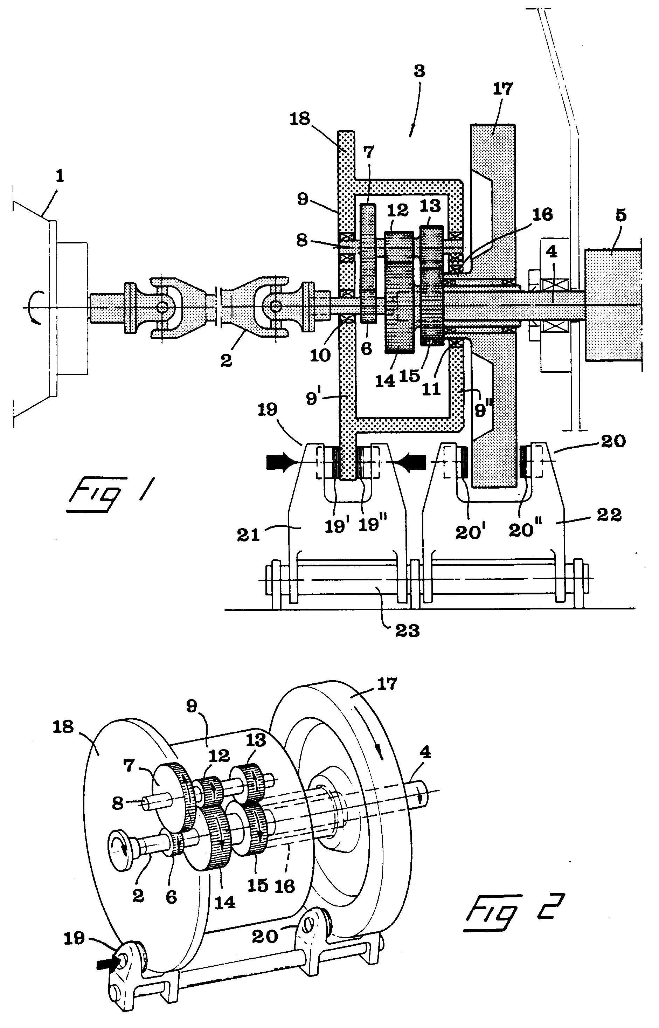

In Fig. 1, a power source 1 is connected , via a first main shaft 2, with a transmission according to the invention, in its entirety designated 3. A second main shaft 4 is connected with a rotatable member 5, e.g. a cylinder or screw belonging to a disintegrator and equipped with processing means. In the shown embodiment, the main shaft 2 forms an input or driving shaft, whereas the main shaft 4 forms an output or driven shaft. In actual practice, the input shaft 2 may be a cardan shaft, but it is also possible to connect the power source 1 with the transmission 3 by means of a rigid shaft.

The transmission according to the invention comprises a first gear wheel 6 which is nonrotatably connected with the input shaft 2 and which engages a second gear wheel 7 disposed on an intermediate shaft 8 which is rotatably mounted in relation to a cover or member 9. In its turn, this cover is, via bearings 10, 11, rotatably mounted about one and the same geometrical centre axis as are the two main shafts 2, 4. To be precise, the two opposite ends of the intermediate shaft 8 are mounted in two spaced-apart end walls 9', 9'' of the cover 9. Furthermore, axially spaced-apart third and fourth gear wheels 12, 13, of which the latter has a larger diameter and more cogs than the former, are nonrotatably connected with the intermediate shaft 8. The third gear wheel 12 engages a fifth gear wheel 14 which is nonrotatably connected with the output shaft 4, and the fourth gear wheel 13 engages a sixth gear wheel 15 disposed on a brakable sleeve 16 mounted on the outside of the output shaft 4. In this preferred embodiment, the sleeve 16 is connected with, or made in the same piece as, a balance wheel 17 having considerable mass.

The cover 9 comprises an annular flange 18 adapted to cooperate with a first braking device 19, and in analogous manner, the balance wheel 17 is adapted to cooperate with a second braking device 20. In actual practice, the cover 9 may be sealed outwards and contain a lubricant, such as oil, for lubricating the gear wheels within.

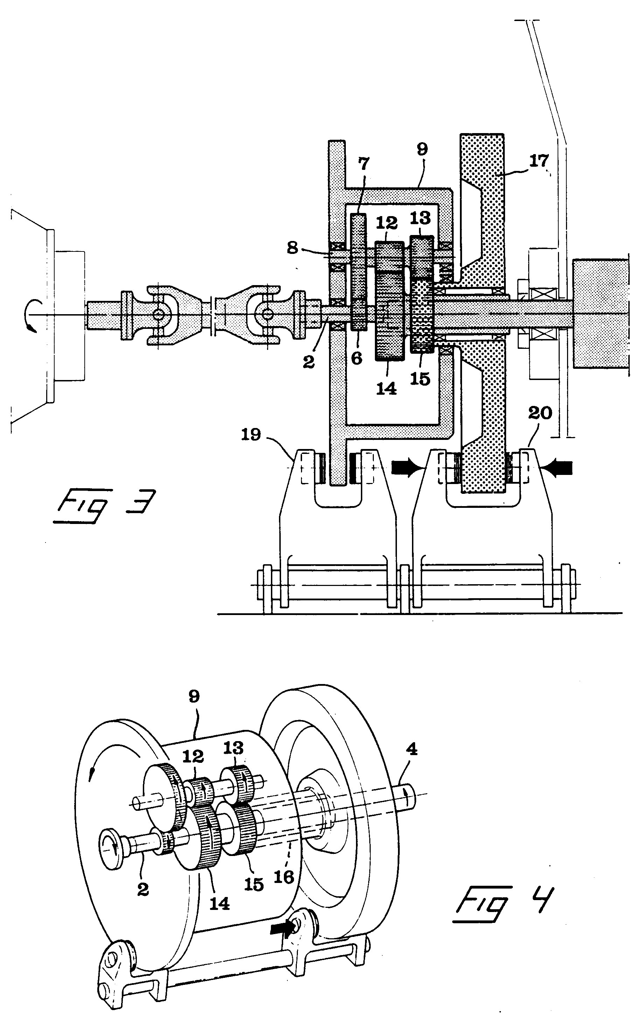

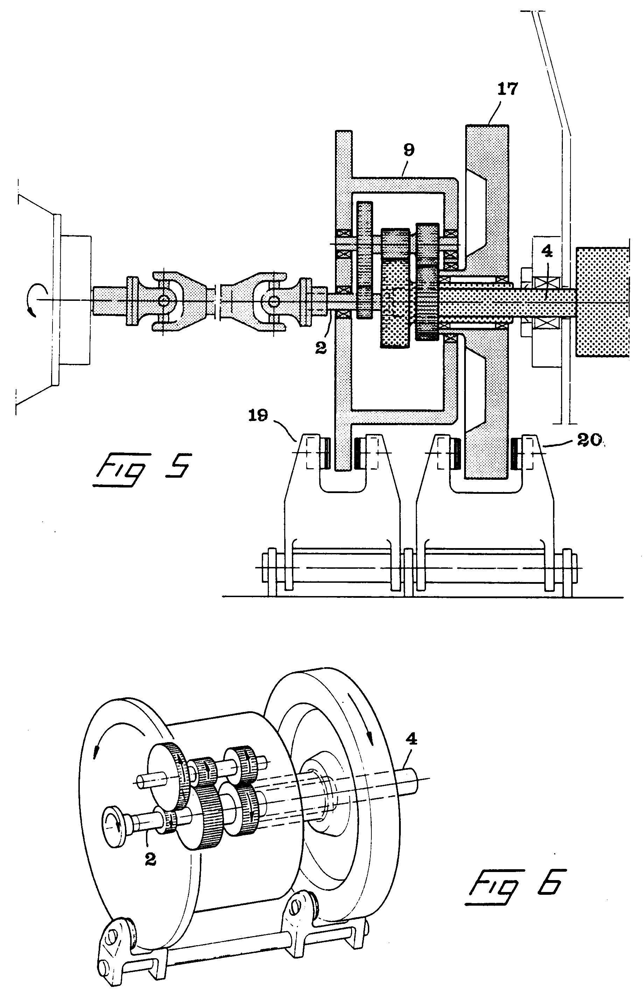

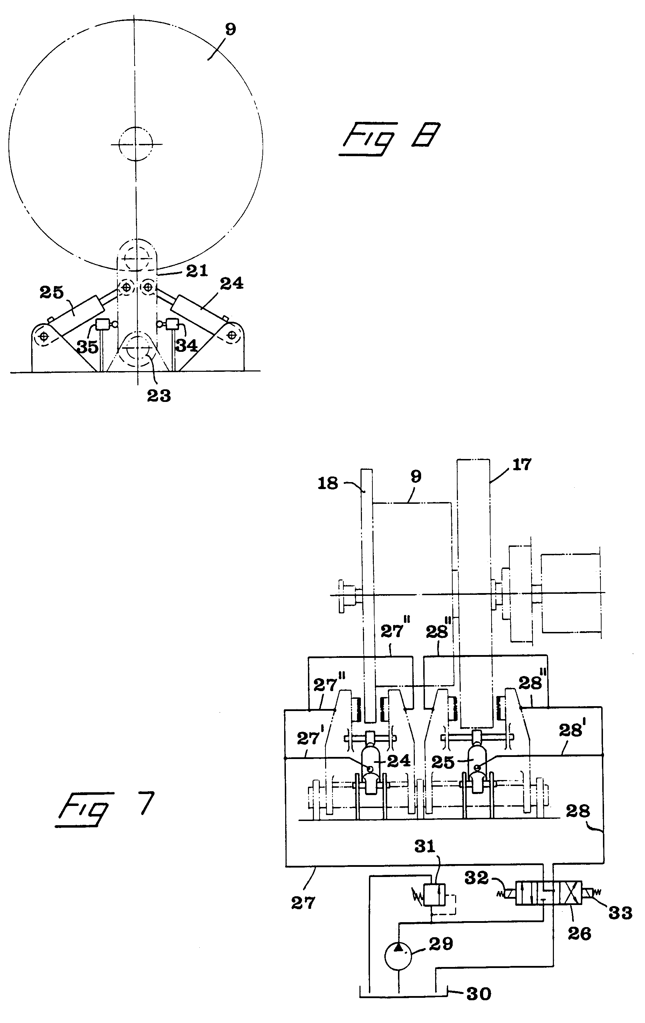

Each braking device 19, 20 comprises a pair of brake shoes 19', 19'' and 20', 20'', respectively, each of which is movable towards and away from the flange 18 and the balance wheel 17, respectively. More precisely, the brake shoes are mounted on bodies 21, 22 which are pivotable about the same pivot shaft 23. As is apparent from Figs. 7 and 8, each body 21, 22 is connected with a hydraulic cylinder 24, 25 whose working chamber is connected with the same hydraulic system which supplies the brake shoes 19', 19'' and 20', 20'' with hydraulic liquid. This hydraulic system comprises two sublines 27 and 28 connected to a common control valve 26 and alternately serving as supply line or return line. The subline 27 has a branch line 27' to the cylinder 24, and two branch lines 27'' to the two brake shoes 19', 19''. In analogous manner, the subline 28 has a branch line 28' to the cylinder 25, and two branch lines 28'' to the brake shoes 20', 20''. The hydraulic system also comprises a pump 29, a tank 30, and a pressure relief valve 31. The control valve 26 is adjustable by means of magnetic devices 32, 33 which are electrically connected to sensors 34 and 35, respectively, adapted to sense possible pivoting movements of the bodies 21, 22 in relation to the pivot shaft 23.

Assuming that the cover 9 is to be maintained braked, while the balance wheel 17 is freely rotatable, the control valve 26 is adjusted such that the pump 29 supplies hydraulic liquid to the cylinder 24 and the brake shoes 19', 19'' via the subline 27, the subline 28 serving as a depressurised return line. The brake shoes 19', 19'' are now applied against the flange 18 of the cover 9, and the cylinder 24 maintains the body 21 in a normal operating state. If there should be a tendency of the transmission 3 being overloaded, e.g. due to the presence of exceptionally resistant objects among the material processed in the disintegrator, the body 21 strives to pivot out of its initial position. This pivoting movement causes the sensor 34 to impulse the control valve 26 to be set to the neutral position shown in Fig. 7, in which there is no pressure in the subline 27.

Figs. 1 and 2 show the transmission in an operating state. The power source 1 operates at all times with one and same direction of rotation of the input shaft 2. In the operating state shown in Figs. 1 and 2, the cover 9 is maintained braked, while the balance wheel 17, or more precisely the sleeve 16, is maintained freely rotatable. Since the cover 9 and, consequently, also the intermediate shaft 8 are stationary, the power transmission between the input shaft 2 and the output shaft 4 will be carried out via the first, second, third and fifth gear wheels 6, 7, 12 and 14, of which the latter is directly nonrotatably connected with the output shaft 4. In the operating state in Figs. 1 and 2, the output shaft 4 is thus driven in the same direction of rotation as the input shaft 2. The transmission ratio can be varied by changing the size of the above gear wheels.

In Figs. 3 and 4, the transmission is shown in a reversing state, in which the balance wheel 17 is maintained braked, while the cover 9 is freely rotatable. Due to the balance wheel 17 being stationary, also the gear wheel 15 nonrotatably connected with the sleeve 16 is maintained stationary. The input shaft 2 still drives the first gear wheel 16 in the same direction of rotation as in Figs. 1 and 2, as well as the second gear wheel 7 and the intermediate shaft 8 nonrotatably connected therewith. Since also the third and fourth gear wheels are nonrotatably connected with the intermediate shaft 8, the rotation of said shaft will make the shaft travel, due to the engagement between the fourth and the sixth gear wheels 13, 15, backwards along the stationary sixth gear wheel 15, while bringing along the cover 9 which thus is caused to rotate in the opposite direction to that of the input shaft 2. Since the circumference of the fourth gear wheel 13 at the pitch circle is larger than that of the third gear wheel 12, the fourth gear wheel 13 will, when rolling on the sixth gear wheel 15, bring along the third gear wheel 12 an equal distance, but, due to its smaller circumference, the third gear wheel 12 will bring along the output shaft 4 a distance equalling the difference in circumference between the fourth gear wheel 13 and the third gear wheel 12, although in a direction of rotation opposite to that of the input shaft 2, as made clear in Fig. 4. This reversed driving of the output shaft is carried out with a number of revolutions lower than the normal operating number of revolutions of the output shaft according to Figs. 1 and 2. In reversion, a desirable reduction of the number of revolutions is thus obtained for disintegrators.

Figs. 5 and 6 show how the two braking devices 19, 20 are disengaged such that both the cover 9 and the balance wheel 17 are freely rotatable. In this case, there is no power transmission at all between the input shaft and the output shaft.

It should be pointed out that the disengaging function shown in Figs. 7 and 8 can be achieved both in the operating state in Figs. 1 and 2 and in the reversing state in Figs. 3 and 4. In the former case, the sensor 34 senses a possible pivoting movement of the body 21, while in the reversing state, the sensor 35 senses possible pivoting movements of the body 22. It should also be made clear that the hydraulic cylinder 25 associated with the body 22 is located behind said body and thus cannot be seen from in front of said body.

It goes without saying that the invention is not restricted to the embodiment described above and shown in the drawings. Thus, it is for example conceivable to completely dispense with the balance wheel, although such a wheel is preferred in connection with transmissions for hard-working disintegrators. If there is no balance wheel, only the sleeve connected with the sixth gear wheel can be brakable, e.g. by means of a simple brake shoe. Although the main shaft 2 has, in the embodiment shown, been designated as a driving input shaft, while the main shaft 4 has been designated as a driven output shaft, it may naturally be the other way around. Furthermore, it should be pointed out that the two braking devices may be constructed in many different ways and comprise, for example, only one movable brake shoe each, adapted to cooperate with a fixed brake lining. Also, the braking devices may use some other pressure medium than hydraulic oil.

## Claims

1. A reversible power transmission having coaxial input and output main shafts (2, 4), comprising:
- a first gear wheel (6) nonrotatably connected with one of said two main shafts;
- an intermediate shaft (8) disposed parallel to said main shafts and rotatably mounted relative to a cover (9) which is rotatable about the same geometrical axis as are the two main shafts;
- a second (7), a third (12) and a fourth (13) gear wheel, which are nonrotatably disposed on said intermediate shaft and spaced apart from one another in the axial direction, said fourth gear wheel being larger than said third gear wheel;
- a fifth gear wheel (14) nonrotatably connected with the second of said two main shafts;
- a sixth gear wheel (15) nonrotatably disposed on a sleeve (16) rotatably mounted on the outside of, and coaxially with the second of said two main shafts;
the first gear wheel (6) meshing with the second gear wheel (7); the third gear wheel (12) meshing with the fifth gear wheel (14); the fourth gear wheel (13) meshing with the sixth gear wheel (15); the cover (9) and the sleeve (16) being brakable relative to ground; the input main shaft being drivable at all times in one and the same direction of rotation; and the transmission being arranged:
a) to drive, in an operating state, the output main shaft (4) in the same direction of rotation as the input shaft (2) by maintaining the cover (9) in braked condition and the sleeve (16) in freely rotatable condition, the power transmission between the main shafts (2, 4) taking place via the first, second, third and fifth gear wheels (6, 7, 12, 14);
b) to drive, in an reversing state, the output main shaft (4) in a direction of rotation opposite to that of the input shaft (2) by maintaining the sleeve (16) in braked condition and the cover (9) in freely rotatable condition, the power transmission between the main shafts taking place via the intermediate shaft (8) which, by its own rotation and the simultaneous engagement between the fourth and the sixth gear wheels (13, 15), causes the cover to rotate, in a direction opposite to the direction of rotation of the input shaft, the engagement between the third and the fifth gear wheels (12, 14) causing the intermediate shaft to bring along the output shaft in the same direction as the cover, in consequence of the fourth gear wheel (13) being larger than the third gear wheel (12); and
c) to transmit, in a state of disengagement when the cover (9) and the sleeve (16) both are freely rotatable, no power at all between the main shafts.

2. Transmission as claimed in claim 1, **characterized** in that the intermediate shaft (8) is suppoerted by and rotatably mounted in two end walls (9', 9'') of the cover (9), which are separate from one another.

3. Transmission as claimed in claim 1 or 2, **characterized** in that all the gear wheels (6, 7, 12, 13, 14, 15) are contained in the cover (9) which is sealed outwards and holds a lubricant for the gear wheels.

4. Transmission as claimed in any one of the preceding claims, **characterized** in that an annular flange (18) adapted to co-operate with a braking device (19) is associated with the cover (9).

5. Transmission as claimed in any one of the preceding claims, **characterized** in that a balance wheel (17) is non-rotatably connected with the sleeve (16) associated with the sixth gear wheel (15).

6. Transmission as claimed in any one of the preceding claims, **characterized** in that the sleeve (16) and/or the balance wheel (15) are adapted to co-operate with a second braking device (20).

7. Transmission as claimed in claims 4 and 6, **characterized** in that the individual braking device (19, 20) comprises at least one brake shoe (19', 19''; 20', 20'') which is movable back and forth between active and inactive positions and which is mounted on a body (21, 22) adapted to turn about a pivot shaft (23) and connected with a compressed-fluid cylinder (24, 25) whose working chamber is connected with one and the same compressed-fluid system which supplies the brake shoe with compressed fluid, and that the compressed-fluid system comprises two sublines for the two braking devices (19, 20), connected with the same control valve (26), a sensor (34, 35) adjacent to the body (21, 22) of the individual braking device being adapted to sense any pivoting movements of the body that may occur from an initial position, and impulse the control valve (26) to cut off the supply of compressed fluid to the braking device at issue, so as to interrupt the braking effect thereof on the cover flange and the sleeve, respectively.

## Patentansprüche

1. Drehrichtungs-umsteuerbares Getriebe mit zueinander koaxialen Antriebs- und Abtriebs-Hauptwellen (2,4), mit
- einem ersten Getriebezahnrad (6), welches drehfest mit einer der beiden Hauptwellen verbunden ist;
- einer Vorgelegewelle (8), welche parallel zu den Hauptwellen verläuft und derart montiert ist, daß sie relativ zu einem Gehäuse (9) rotieren kann, welches seinerseits um die gleiche geometrische Achse wie die beiden Hauptwellen drehbar ist;
- einem zweiten (7), einem dritten (12) und einem vierten (13) Getriebezahnrad, welche drehfest mit der Vorgelegewelle verbunden sind und in Axialrichtung in Abstand zueinander angeordnet sind, wobei das vierte Getriebezahnrad größer als das dritte Getriebezahnrad ist;
- einem fünften Getriebezahnrad (14), welches drehfest mit der zweiten der beiden Hauptwellen verbunden ist;
- einem sechsten Getriebezahnrad (15), welches drehfest auf einer Hülse (16) auf deren Außenseite montiert angeordnet ist, und koaxial zu der zweiten der beiden Hauptwellen montiert ist;
wobei das erste Getriebezahnrad (6) mit dem zweiten Getriebezahnrad (7) kämmt; das dritte Getriebezahnrad (12) mit dem fünften Getriebezahnrad (14) kämmt; das vierte Getriebezahnrad (13) mit dem sechsten Getriebezahnrad (15) kämmt; das Gehäuse (9) und die Hülse (16) relativ zu dem Boden bremsbar sind; die Antriebswelle stets in ein und die gleiche Drehrichtung antreibbar ist; und das Getriebe derart ausgebildet ist, um :
(a) im Betriebszustand die Abtriebs-Hauptwelle (4) in der gleichen Rotationsrichtung wie die Antriebswelle (2) anzutreiben, indem das Gehäuse (9) in dem gebremsten Zustand gehalten wird und die Hülse (16) frei drehbar ist, wobei die Leistungsübertragung zwischen den Hauptwellen (2,4) mittels des ersten, zweiten, dritten und fünften Getriebezahnrads (6,7,12,14) erfolgt;
(b) in einem Rückwärtsgang-Betriebszustand die Abtriebs-Hauptwelle (4) in einer der Antriebswelle (2) entgegengesetzten Drehrichtung anzutreiben, indem die Hülse (16) in einem gebremsten Zustand und das Gehäuse (9) in einem frei drehbaren Zustand gehalten werden, wobei die Leistungsübertragung zwischen den Hauptwellen mittels der Vorgelegewelle (8) erfolgt, welche aufgrund ihrer Rotation und den gleichzeitigen Eingriff zwischen dem vierten und dem sechsten Getriebezahnrad (13, 15) das Gehäuse in eine der Rotationsrichtung der Antriebswelle entgegengesetzten Richtung in Drehung versetzt, wobei der Eingriff zwischen dem dritten und dem fünften Getriebezahnrad (12, 14) zur Folge hat, daß die Vorgelegewelle die Abtriebswelle in die gleiche Richtung wie das Gehäuse dreht, weil das vierte Getriebezahnrad (13) größer als das dritte Getriebezahnrad (12) ist; und
(c) in einem außer Eingriff befindlichen Betriebszustand, in welchem das Gehäuse (9) und die Hülse (16) frei drehbar sind, überhaupt keine Leistung zwischen den Hauptwellen übertragen wird.

2. Getriebe nach Anspruch 1, dadurch gekennzeichnet, daß die Vorgelegewelle (8) in zwei Endwänden (9', 9'') des Gehäuses (9) drehbar gelagert und abgestützt ist, welche voneinander getrennt sind.

3. Getriebe nach Anspruch 1 oder 2, dadurch gekennzeichnet, daß sämtliche Getriebezahnräder (6, 7, 12, 13, 14, 15) im Inneren des Gehäuses (9) untergebracht sind, welches nach außen abgedichtet ist, und einen Schmierstoff für die Getriebezahnräder enthält.

4. Getriebe nach einem der vorangehenden Ansprüche, dadurch gekennzeichnet, daß ein für das Zusammenwirken mit einer Bremsvorrichtung (19) gestalteter Ringflansch (18) mit dem Gehäuse (9) verbunden ist.

5. Getriebe nach einem der vorangehenden Ansprüche, dadurch gekennzeichnet, daß ein Schwungrad (17) drehfest mit der Hülse (16) verbunden ist, welche ihrerseits mit dem sechsten Getriebezahnrad (15) verbunden ist.

6. Getriebe nach einem der vorangehenden Ansprüche, dadurch gekennzeichnet, daß die Hülse (16) und/oder das Schwungrad (15) derart ausgebildet sind, daß diese mit einer zweiten Bremsvorrichtung (20) zusammenwirken.

7. Getriebe nach Ansprüchen 4 und 6, dadurch gekennzeichnet, daß die jeweilige einzelne Bremsvorrichtung (19, 20) mindestens eine Bremsbacke (19', 19''; 20', 20'') aufweist, welche zwischen einer im Eingriff befindlichen und einer außer Eingriff befindlichen Stellung hin und her bewegt werden kann und welche an einen um eine Schwenkwelle (23) schwenkbaren Körper (21, 22) montiert ist und mit einem unter Druck stehendes Fluid aufweisenden Zylinder (24, 25) verbunden ist, dessen Arbeitskammer mit ein und demselben Fluiddruck-System verbunden ist, welches die Bremsbacke mit unter Druck stehendem Fluid versorgt, und daß das Fluiddruck-System zwei Ausgangsleitungen für die beiden Bremsvorrichtungen (19, 20) aufweist, welche mit demselben Steuerventil (26) verbunden sind, wobei ein Sensor (34, 35) in der Nähe des jeweiligen Körpers (21, 22) der einzelnen Bremsvorrichtungen dazu geeignet ist, jegliche Schwenkbewegungen des Körpers ausgehend von seiner Ausgangsstellung zu erfassen, und einen Impuls an das Steuerventil (26) zu senden, um die Zufuhr von unter Druck stehendem Medium zu der betreffenden Bremsvorrichtung zu unterbinden, um so die Bremswirkung dieser hinsichtlich des Gehäuse-Flansches bzw. der Hülse zu beenden.

## Revendications

1. Dispositif réversible de transmission d'une puissance, muni d'arbres principaux coaxiaux d'entrée et de sortie (2, 4), comportant
- une première roue de transmission (6), reliée de manière non rotative à l'un des deux arbres principaux,
- un arbre intermédiaire (8) disposé de manière parallèle auxdits arbres principaux et monté rotatif par rapport à un capot (9) qui peut tourner autour du même axe géométrique que les deux arbres principaux ;
- une deuxième (7), troisième (12) et quatrième (13) roue de transmission qui sont disposées de manière non rotative sur ledit arbre intermédiaire et écartées l'une de l'autre dans la direction axiale, la quatrième roue de transmission étant plus large que ladite troisième roue ;
- une cinquième roue de transmission (14) reliée de manière non rotative au deuxième desdits arbres principaux ;
- une sixième roue de transmission (15) disposée de manière non rotative sur une gaine (16), montée de manière rotative sur l'extérieur du deuxième des arbres principaux, et coaxialement par rapport à celui-ci,
la première roue de transmission (6) engrenant avec la deuxième roue de transmission (7), la troisième roue de transmission (12) engrenant avec la cinquième roue de transmission (14), la quatrième roue de transmission (13) engrenant avec la sixième roue de transmission (15), le capot (9) et la gaine (16) pouvant être freinés par rapport à la terre, l'arbre principal d'entrée pouvant être entraîné toujours dans le même sens de rotation, et la transmission étant agencée
a) pour, en fonctionnement, entraîner l'arbre principal de sortie (4) dans le même sens de rotation que l'arbre d'entrée (2) en maintenant le capot (9) freiné et la gaine (16) libre en rotation, la transmission de puissance entre les arbres principaux (2, 4) ayant lieu par l'intermédiaire des première, deuxième, troisième et cinquième roues de transmission (6, 7, 12, 14) ;
b) pour entraîner, en situation inversée, l'arbre principal de sortie (4) dans un sens de rotation opposé à celui de l'arbre d'entrée (2) en maintenant la gaine (16) freinée et le capot (9) libre en rotation, la transmission de puissance entre les arbres principaux ayant lieu au moyen de l'arbre intermédiaire (8), ce qui, par la propre rotation de cet arbre et la coopération simultanée entre la quatrième et la sixième roue de transmission (13, 15), induit le capot en rotation dans un sens opposé au sens de rotation de l'arbre d'entrée, la coopération entre la troisième et la cinquième roue de transmission (12, 14) induisant l'arbre intermédiaire à entraîner l'arbre de sortie dans le même sens de rotation que le capot, étant donné que la quatrième roue de transmission (13) est plus grande que la troisième roue de transmission (12) ; et
c) pour ne transférer aucune puissance entre les arbres principaux lors d'un état débrayé lorsque le capot (9) et la gaine (16) peuvent tous les deux tourner librement.

2. Dispositif de transmission selon la revendication 1,
caractérisé en ce que l'arbre intermédiaire (8) est porté par deux parois d'extrémité (9', 9'') du capot (9), séparées entre elles, dans lesquelles il peut tourner librement.

3. Dispositif de transmission selon la revendication 1 ou 2,
caractérisé en ce que toutes les roues de transmission (6, 7, 12, 13, 14, 15) sont logées dans le capot (9) qui est étanche vers l'extérieur et contient un lubrifiant pour les roues de transmission.

4. Dispositif de transmission selon l'une quelconque des revendications précédentes,
caractérisé en ce qu'une bride annulaire (18) apte à coopérer avec un dispositif de freinage (19) est associée au capot (9).

5. Dispositif de transmission selon l'une quelconque des revendications précédentes,
caractérisé en ce qu'un volant (17) est relié de manière non rotative à la gaine (16) associée à la sixième roue de transmission (15).

6. Dispositif de transmission selon l'une quelconque des revendications précédentes,
caractérisé en ce que la gaine (16) et/ou le volant (17) sont aptes à coopérer avec un deuxième dispositif de freinage (20).

7. Dispositif de transmission selon les revendications 4 et 6,
caractérisé en ce que le dispositif de freinage respectif (19, 20) comprend au moins un patin de freinage (19', 19'', 20', 20'') qui peut s'avancer et reculer entre une position active et une position inactive et qui est monté sur un corps (21, 22) qu'on peut faire pivoter autour d'un axe de pivotement (23) et qui est relié à un vérin à fluide sous pression (24, 25) dont la chambre de travail est reliée au même système de fluide sous pression qui alimente le patin de freinage en fluide sous pression,
et en ce que le système de fluide sous pression comprend deux conduits secondaires pour les deux dispositifs de freinage (19, 20), reliés à la même vanne de commande (25), un capteur (34, 35) disposé au voisinage du corps (21, 22) du dispositif de freinage respectif et qui est apte à détecter tout mouvement de rotation du corps à partir d'une position initiale et à amener la vanne de commande (26) à couper l'alimentation en fluide sous pression du dispositif de freinage en question de manière à interrompre l'action de freinage de celui-ci respectivement sur la bride du capot et sur la gaine.
